# EUROPÄISCHE PATENTSCHRIFT

(11) **EP 2 279 446 B1**
(45) Veröffentlichungstag und Bekanntmachung des Hinweises auf die Patenterteilung: **19.06.2013**
(21) Anmeldenummer: 09734333.9
(22) Anmeldetag: 20.04.2009
(51) Int. Cl.: G03H 1/02, B42D 15/10, G03H 1/22, G02F 1/01

(54) **ELEKTRISCH STIMULIERBARES VOLUMENHOLOGRAMM**
ELECTRICALLY STIMULATABLE VOLUME HOLOGRAM
HOLOGRAMME DE VOLUME ÉLECTROSTIMULABLE

(30) Priorität: 21.04.2008 DE 102008020769
(43) Veröffentlichungstag der Anmeldung: 02.02.2011
(73) Patentinhaber: Bundesdruckerei GmbH, 10969 Berlin (DE)
(72) Erfinder: LEOPOLD, André, 10119 Berlin (DE); FISCHER, Jörg, 13053 Berlin (DE); PAESCHKE, Manfred, 16348 Wandlitz OT Basdorf (DE)
(74) Vertreter: Obst, Bernhard
(86) Internationale Anmeldenummer: PCT/EP2009/002994
(87) Internationale Veröffentlichungsnummer: WO 2009/130038

(56) Entgegenhaltungen:
- WO-A-2006/008531
- WO-A-2007/042177
- US-A- 5 044 736

## Beschreibung

Die Erfindung betrifft Sicherheitselemente sowie ein Verfahren zur Herstellung von Sicherheitselementen, die ein Aufzeichnungsmaterial, in dem mindestens ein Volumenhologramm gespeichert ist, und mindestens zwei voneinander getrennt ausgebildete Elektroden umfasst, an die eine Spannung anlegbar ist, wobei die mindestens zwei Elektroden und das Aufzeichnungsmaterial so ausgebildet und zueinander angeordnet sind, dass bei einem Anlegen der Spannung oder Beaufschlagung mit Ladungen zumindest eine lokale mechanische Veränderung, insbesondere eine Verformung, des Aufzeichnungsmaterials eintritt, so dass eine Rekonstruktion des Volumenhologramms zumindest lokal verändert ist. Insbesondere betrifft die Erfindung Sicherheitselemente und ein Verfahren zu deren Herstellung, die insbesondere für Sicherheits- und/oder Wertdokumente eingesetzt werden.

Sicherheitselemente dienen dazu, ein Sicherheits- und/oder Wertdokument gegen Fälschung und/oder Kopieren zu sichern. Eine Art von Sicherheitselementen umfassen Volumenhologramme. In dem Volumenhologramm sind Informationen gespeichert, die oftmals auch individualisierende Angaben, beispielsweise Seriennummern, Ausweisnummern, biometrische Daten, Bilder (Passbilder), usw., enthalten. Diese Informationen können in Klarschrift bzw. Bildform oder optisch codiert bzw. maschinenlesbar vorgesehen sein.

Sicherheitselemente werden so ausgestaltet, dass ein Nachahmungs- und/oder Fälschungsaufwand möglichst groß ist. Dies bedeutet, dass technische Verfahren zur Anwendung gebracht werden, die ein hohes Maß an Know-how und apparativem Aufwand erfordern, um die Sicherheitselemente herzustellen. Darüber hinaus ist es häufig Ziel, möglichst viele Informationen über eine konkrete Herstellung und/oder Ausgestaltung des Sicherheitselements geheim zu halten und lediglich die notwendigen Informationen zu veröffentlichen, die für eine Überprüfung auf Echtheit und/oder Unversehrtheit des Sicherheitselements von Nöten sind.

Das grundsätzliche Vorgehen bei der Herstellung von Hologrammen mit individualisierenden Angaben ist beispielsweise in der Literaturstelle EP 0 896 260 A2 beschrieben. Die Grundzüge werden im Folgenden kurz erläutert. Zunächst wird ein Hologrammmaster, der als Hologramm ausgebildet sein kann, hergestellt. Dann wird der Hologrammmaster hinter ein holografisches Aufzeichnungsmaterial positioniert, beispielsweise in flächigem Kontakt, ggf. getrennt durch eine Schutzfolie. Kohärentes Licht, beispielsweise aus einem Laser, wird auf die dem Hologrammmaster abgewandte Seite des holografischen Aufzeichnungsmaterials eingestrahlt, typischerweise mit definierter Wellenlänge und definiertem Inzidenzwinkel, gegebenenfalls nach Maßgabe des vom Hologrammmaster zu rekonstruierenden holografischen Musters. Es durchdringt das holografische Aufzeichnungsmaterial und wird vom Hologrammmaster gebeugt bzw. reflektiert, wobei sich das Hologramm durch Interferenz mit dem einfallenden Licht in dem holografischen Aufzeichnungsmaterial abbildet und durch photochemische- oder photophysikalische Prozesse im holografischen Aufzeichnungsmaterial speichert. Dabei kann der Hologrammmaster so ausgelegt sein, dass er für mehrere Wellenlängen empfindlich ist und diese entsprechend beugt bzw. reflektiert. Auch andere geometrische Anordnungen als die hier beschriebenen Anordnungen sind möglich. Ferner muss der Hologrammmaster kein Hologramm sein. Der Hologrammmaster kann beispielsweise eine sägezahnartige Struktur, wie sie aus DE 20 2007 006 796 U1 bekannt ist, sein.

Die Belichtung kann mit Licht einer Wellenlänge (einfarbig) oder mit unterschiedlichen Wellenlängen (farbig) erfolgen.

Eine Individualisierung des Hologramms erfolgt z. B. über Modulation des verwendeten Lichts. Aus der Praxis sind Spatial Light Modulatoren in Form von Liquid Crystal Displays (LCD) bekannt. Die Funktionsweise entspricht beispielsweise der Projektion eines Dias, wobei der Spatial Light Modulator anstelle des Dias tritt. Aus der Praxis sind des Weiteren digitale Projektoren bekannt, welche ein DMD (Digital Micro Mirror Device) als Spatial Light Modulator umfassen. Aus der Literaturstelle DE 10 2005 054 396 A1 ist der Einsatz eines Spatial Light Modulators in Form eines Digital Micro Mirror Device (DMD) zur Markierung von Gegenständen bekannt.

Um die Fälschungssicherheit und/oder Manipulationssicherheit von Sicherheitselementen mit einem Volumenhologramm weiter zu steigern, sind Sicherheitselemente bekannt, die eine veränderte optische Rekonstruktion bei Einwirkung einer externen Anregung aufweisen. In der WO 20071042176 A1 ist beispielsweise ein interaktives Sicherheitselement beschrieben, das mindestens ein Volumenhologramm umfasst Das Volumenhologramm reagiert auf mindestens eine äußere Anregung und zeigt einen definierten optischen Effekt in Form einer Abbildung, wobei der optische Effekt in Form der Abbildung vorzugsweise für unterschiedliche Betrachtungswinkel unterschiedlich ist und die unterschiedlichen Abbildungen zumindest dann beobachtbar sind, wenn die externe Anregung angewendet worden ist. Ferner sind ein Verfahren zur Verifikation des interaktiven Sicherheitselements sowie eine Anwendung als öffentliches Merkmal für Sicherheitsprodukte, beispielsweise Banknoten, Reisepässe, Identifikationsdokumente, Eintrittskarten usw., beschrieben. Detailliert ist eine Ausführungsform eines Volumenhologramms beschrieben, welches aus photosensitiven Silberhalogenitteilchen in einem polymerischen Medium besteht, welches Gelatine sein kann. Wird dieses Material einer Flüssigkeit, beispielsweise Wasser, ausgesetzt, so ändert sich dessen Volumen, was wiederum dazu führt, dass sich Rekonstruktionsbedingungen eines in diesem Material aufgezeichneten Volumenhologramms ändern. Ohne genauere Ausführung sind als mögliche externe Anregungen ferner ein elektrisches Feld, elektrische Ladung und ein elektrisches Potential aufgeführt. Wie eine konkrete Ausgestaltung eines Sicherheitselements auszuführen ist, welches auf eine der zuletzt genannten äußeren Anregungen reagiert, ist jedoch nicht entnehmbar.

Aus der WO 00/62104 A1 sind ein System und ein Verfahren zur Modulation einer Lichtintensität bekannt. Beschrieben ist ein Lichtintensitätsmodulator, der ein Hologramm verwendet. Bei einer Ausführungsform umfasst der Lichtintensitätsmodulator einen elektrischen Schaltkreis und ein holografisches optisches Element, welches ein Hologramm umfasst. Das holografische optische Element ist elektrisch mit einer variablen Spannung verknüpft und empfängt diese, die von dem elektrischen Schaltkreis erzeugt ist. Zusätzlich empfängt das holografische optische Element einfallendes Licht einer Lichtquelle. Das holografische optische Element empfängt und beugt das einfallende Licht, um erstes und zweites Ausgabelicht zu erzeugen. Eine Intensität des ersten Ausgabelichts variiert direkt mit einer Größe der Spannung. Das erste und zweite Ausgabelicht schließen einen von Null verschiedenen Winkel zwischen einander ein. Durch ein Anlegen einer Wechselspannung wird ein Brechungsindex in einem polymerdispergierten Flüssigkristall verändert.

Die bekannten externen elektrisch stimulierbaren Sicherheitselemente und/oder Hologramme verwenden Materialien, deren intrinsische Eigenschaften sich unter äußerer Anregung verändern.

Bei den beschriebenen Systemen werden speziell auf die Anregung angepasste Aufzeichnungsmaterialen benötigt. Dieses verkompliziert einen Herstellungsprozess der Sicherheitsmerkmale.

### Technisches Problem der Erfindung.

Der Erfindung liegt das technische Problem zugrunde, ein verbessertes Sicherheitselement und ein verbessertes Verfahren zur Herstellung eines Sicherheitselements zu schaffen, welches über eine angelegte Spannung stimulierbar ist, um einen optisch wahrnehmbaren Effekt auszulösen, wobei nicht speziell an eine elektrische Stimulation angepasste Volumenhologramme verwendet werden können.

### Definitionen

Ein Sicherheitselement ist eine bauliche Einheit, die zumindest ein Sicherheitsmerkmal umfasst. Ein Sicherheitselement kann eine selbstständige bauliche Einheit sein, die mit einem Sicherheits- und/oder Wertdokument verbunden, beispielsweise verklebt werden kann, es kann sich aber auch um einen integralen Bestandteil eines Sicherheits- und/oder Wertdokumentes handeln. Ein Beispiel für Erstes ist ein auf ein Sicherheits- und/oder Wertdokument aufklebbares Visum. Ein Beispiel für Letzteres ist ein in einen Geldschein oder einen Ausweis integriertes, beispielsweise einlaminiertes Hologramm.

Ein Sicherheitsmerkmal ist eine Struktur, die nur mit (gegenüber einfachem Kopieren) erhöhtem Aufwand oder gar nicht unautorisiert herstellbar bzw. reproduzierbar ist.

Ein Muster besteht typischerweise aus einer Vielzahl nebeneinander angeordneter Mustereinheiten bzw. Pixel. Die Mustereinheiten bzw. Pixel eines Musters sind einander zugeordnet und in definierter Weise lateral zueinander angeordnet, typischerweise in zwei Raumdimensionen. Die Mustereinheiten sind in der Regel gleich beschaffen. Sie können jedoch auch unterschiedlich, beispielsweise unterschiedlich groß oder unregelmäßig angeordnet, sein.

Als Sicherheits- und/oder Wertdokumente seien lediglich beispielhaft genannt: Personalausweise, Reisepässe, ID-Karten, Zugangskontrollausweise, Visa, Steuerzeichen, Tickets, Führerscheine, Kraftfahrzeugpapiere, Banknoten, Schecks, Postwertzeichen, Bankkarten, Kreditkarten, beliebige Chipkarten und Haftetiketten (z. B. zur Produktsicherung). Solche Sicherheits- und/oder Wertdokumente weisen typischerweise ein Substrat, eine Druckschicht und optional eine transparente Deckschicht auf. Ein Substrat ist eine Trägerstruktur, auf welche die Druckschicht mit Informationen, Bildern, Mustern und dergleichen aufgebracht wird. Als Materialien für ein Substrat kommen alle fachüblichen Werkstoffe auf Papier- und/oder Kunststoffbasis in Frage.

Ein Spatial Light Modulator (SLM) erlaubt eine zweidimensional ortsaufgelöste Beleuchtung bzw. Bestrahlung eines meist flächigen Gegenstandes mit modulierter Intensität und/oder Phase. Hierbei kann es sich beispielsweise um einen DMD (Digital Micro Mirror Device) Chip, ein LCD (Liquid Crystal Display) Transmissionsdisplay oder ein LCoS (Liquid Crystal on Silicon) Display handeln. Allen ist gemeinsam, dass eine Vielzahl von SLM-Pixeln gebildet ist, wobei jedes SLM-Pixel unabhängig von anderen SLM-Pixeln aktivierbar oder deaktivierbar ist (auch Zwischenstufen sind möglich), wodurch durch entsprechende Ansteuerung der SLM-Pixel sich Muster oder Bilder projizieren lassen. Durch die freie Ansteuerbarkeit können auch ohne weiteres verschiedene Bilder oder Muster in zeitlicher Folge hintereinander generiert werden, beispielsweise in Form eines Passfotos.

Ein Code bzw. Muster ist individualisierend, wenn er einzigartig für eine Person oder einen Gegenstand oder eine Gruppe von Personen oder Gegenständen aus einer größeren Gesamtmenge an Personen oder Gegenständen ist. Ein für eine Gruppe von Personen innerhalb der Gesamtmenge der Einwohner eines Landes individualisierender Code ist beispielsweise die Stadt des Wohnortes. Ein für eine Person individualisierender Code ist beispielsweise die Nummer des Personalausweises oder das Passbild. Ein für eine Gruppe von Geldscheinen innerhalb der Gesamtmenge der Geldschiene individuatisierender Code ist die Wertigkeit. Für einen Geldschein individualisierend ist die Seriennummer. Beispiele für nicht individualisierende Codes bzw. Muster sind Wappen, Siegel, Hoheitszeichen, etc. für Sicherheit oder Wertdokumente eines Hoheitsgebiets.

Alternativ kann eine Individualisierung über individuell bedruckte Folien vorgenommen werden, die ähnlich zu einem Diapositiv in dem Strahlengang des kohärenten Lichts, ggf. auch in direktem Kontakt zum holografischen Material angeordnet werden.

Ein holografisches Aufzeichnungsmaterial ist eine Schicht aus einem Material, welches photosensitiv ist, und in welcher sich Holografien durch irreversible, aber auch reversible photochemische und/oder photophysikalische Prozesse im Wege der Belichtung speichern lassen. Alle bekannten Materialien können eingesetzt werden, so dass auf die Fachliteratur des Durchschnittsfachmannes verwiesen werden kann. Lediglich beispielhaft seien die in der Holografie üblichen Photopolymere genannt.

Der Begriff der Farbe wird im Rahmen der Erfindung als eine Wellenlänge bzw. eine Spektrallinie verstanden. Mischfarben weisen mehrere verschiedene Wellenlängen bzw. Spektrallinien auf. Der Begriff der Farbe umfasst daher neben dem sichtbaren Bereich auch UV und IR.

Als elastisches Element wird eine bauliche Einheit bezeichnet, die elastisch verformbar ist. Dieses bedeutet, dass das elastische Element sich unter einer äußeren Krafteinwirkung verformt und seine äußere Gestalt und in der Regel ebenso innere Gestalt ändert. Fällt die äußere Krafteinwirkung weg, so kehrt das elastische Element in seine Ausgangsgestalt zurück. Es versteht sich für den Fachmann, dass ein elastisches Element diese elastische Eigenschaft nur gegenüber äußeren Kräften einer vorgegebenen Größenordnung besitzt. Wird eine gewisse Krafteinwirkung überschritten, so werden die meisten elastischen Materialien zerstört und/oder dauerhaft verformt. Als elastisches Element wird somit im Sinne dieser Beschreibung ein Element angesehen, das unter einer Krafteinwirkung bis zu einer gewissen Maximalkraft elastisch verformt wird und bei Wegfall der äußeren Krafteinwirkung in seinen Ausgangszustand, insbesondere seine Ausgangsform, zurückkehrt.

Grundzüge der Erfindung und bevorzugte Ausführungsformen.

Die Erfindung schafft ein Sicherheitselement, umfassend ein Aufzeichnungsmaterial, in dem mindestens ein Volumenhologramm gespeichert ist, und mindestens zwei voneinander getrennt ausgebildete Elektroden, an die eine Spannung anlegbar ist oder die mit Ladungen beaufschlagbar sind, wobei die mindestens zwei Elektroden und das Aufzelchnungsmaterial so ausgebildet und zueinander angeordnet sind, dass bei einem Anlegen der Spannung oder Beaufschlagung mit Ladungen zumindest eine lokale mechanische Veränderung, insbesondere eine Verformung, des Aufzeichnungsmaterials eintritt, so dass eine Rekonstruktion des Volumenhologramms zumindest lokal verändert ist, wobei mindestens ein elastisches Element zwischen dem Aufzeichnungsmaterial und einer der mindestens zwei Elektroden angeordnet ist. Ferner wird ein Verfahren zum Herstellen eines Sicherheitselements vorgeschlagen, welches die Schritte umfasst: Bereitstellen eines Aufzeichnungsmaterials, in dem mindestens ein Volumenhologramm gespeichert ist, und Ausbilden von mindestens zwei voneinander getrennten Elektroden, an die eine Spannung anlegbar ist oder die mit Ladungen beaufschlagbar sind, wobei die mindestens zwei Elektroden und das Aufzeichnungsmaterial so ausgebildet und zueinander angeordnet werden, dass bei einem Anlegen der Spannung oder Beaufschlagung mit Ladungen zumindest eine lokale mechanische Veränderung, insbesondere Verformung, des Aufzeichnungsmaterials eintritt, so dass eine Rekonstruktion des Volumenhologramms zumindest lokal verändert ist, wobei mindestens ein elastisches Element zwischen dem Aufzeichnungsmaterial und einer der mindestens zwei Elektroden angeordnet wird. Das Aufzeichnungsmaterial, in dem Hologramme gespeichert werden, ist in der Regel kaum komprimierbar oder dehnbar. Eine mechanische Verformung des Aufzeichnungsmaterials, die zu einer Veränderung der Bragg-Ebenen führt, welche eine Speicherung des Volumenhologramms repräsentieren, ist somit nur durch relativ hohe elektrostatische Kräfte möglich, die durch die Elektroden direkt auf das holografische Aufzeichnungsmaterial übertragen werden. Eine solche elektrostatische Druckkraft zwischen den Elektroden entsteht dann, wenn die mindestens zwei Elektroden mit gleichen Ladungsträgern beaufschlagt werden, welches zu einer Abstoßung der Elektroden führt, oder mit verschiedenartigen Ladungsträgern beaufschlagt werden, was zu einer Anziehung der Elektroden führt. Das holografische Aufzeichnungsmaterial ist vorzugsweise als dünne Schicht ausgebildet. Beispielsweise ist das Aufzeichnungsmaterial ein belichtetes und entwickeltes photoempfindliches Photopolymer. Auch wenn eine solche dünne Schicht nahezu inkompressibel ist, ist eine Verformung der ganzen Schicht bei geringeren Kräften möglich. Eine solche Verformung ist leichter möglich, wenn zwischen mindestens einer der Elektroden und dem holografischen Aufzeichnungsmaterial ein elastisches Element angeordnet ist, welches leichter als das holografische Aufzeichnungsmaterial, d. h. bereits bei geringeren Kräften, elastisch verformbar ist. Die Verformung des holografischen Aufzeichnungsmaterials führt dazu, dass auch die Bragg-Ebenen, die in dem belichteten holografischen Aufzeichnungsmaterial ausgebildet sind, verformt werden. Hierdurch ändern sich folglich auch die Rekonstruktionsbedingungen des in dem holografischen Aufzeichnungsmaterial bzw. den Bragg-Ebenen gespeicherten Volumenhologramms. Durch eine Anordnung mindestens eines elastischen Elements zwischen einer der Elektroden und dem holografischen Aufzeichnungsmaterial wird bei einem Anlegen einer Spannung an die Elektroden ein optisch wahrnehmbarer Effekt ausgelöst, der auf eine zumindest lokale Änderung der Beugungsbedingungen, insbesondere einer Beugungseffizienz, aufgrund der Verformung des holografischen Aufzeichnungsmaterials zurückzuführen ist.

Besonders gut ist das Aufzeichnungsmaterial zumindest lokal senkrecht zu einer flächigen Ausdehnung des Aufzeichnungsmaterials lokal verformbar, wenn das Aufzeichnungsmaterial zumindest lokal zwischen dem mindestens einen elastischen Element oder zwischen dem mindestens einen elastischen Element und einem weiteren elastischen Element angeordnet ist. Dies bedeutet, dass an zwei gegenüberliegenden Seiten des Aufzeichnungsmaterials ein elastisches Element bzw. zwei unterschiedliche elastische Elemente angrenzen. Eine Relativbewegung der mindestens zwei Elektroden bei einer Beaufschlagung mit Ladung und/oder einem Anlegen einer Spannung führt dazu, dass das mindestens eine elastische Element sich zumindest lokal verformt. Diese Verformung wird auf das Aufzeichnungsmaterial übertragen, welches der Verformung so ausweichen kann, dass auch ein auf der anderen Seite angeordnetes weiteres elastisches Element oder das elastische Element selbst, welches an zwei einander gegenüberliegende Seiten des Aufzeichnungsmaterials angrenzt, ebenfalls verformt wird.

Vorzugsweise ist eine flächige Ausdehnung zumindest einer der mindestens zwei Elektroden kleiner als eine flächige Ausdehnung des Speicherbereichs des mindestens einen Volumenhologramms in dem Aufzeichnungsmaterial. Als Speicherbereich wird jener Bereich angesehen, in dem die Bragg-Ebenen in dem Volumenhologramm ausgebildet sind, die das gespeicherte Volumenhologramm repräsentieren. Eine lokal wirkende Kraft, vorzugsweise senkrecht zurflächigen Ausdehnung des Speicherbereichs bzw. des Aufzeichnungsmaterials, führt somit zu einer Verformung des Aufzeichnungsmaterials und somit der Bragg-Ebenen zumindest benachbart zu der flächigen Ausdehnung der mindestens einen kleiner ausgebildeten Elektrode.

Die Verformung des Aufzeichnungsmaterials nur in einem lokal begrenzten Bereich des Aufzeichnungsmaterials führt dazu, dass eine Änderung der Rekonstruktion des Volumenhologramms nur lokal begrenzt auftritt. Die sich ergebende Verformung bei einer Beaufschlagung mit Ladung der mindestens zwei Elektroden kann vorausberechnet werden. Somit ist es möglich, das Volumenhologramm in dem Aufzeichnungsmaterial so zu speichern, dass dieses vollflächig rekonstruiert, wenn das Aufzeichnungsmaterial durch eine Beaufschlagung mit vorgegebenen Ladungsmengen der mindestens zwei Elektroden in dem Sicherheitselement verformt ist. Im nicht mit Ladungen beaufschlagten Zustand rekonstruiert das Volumenhologramm zumindest lokal unter einer vorgegebenen Rekonstruktionsgeometrie nicht, während es in übrigen Bereichen rekonstruiert. Werden jedoch die Elektroden mit den vorgegebenen Ladungsmengen beaufschlagt, so verformt sich das Aufzeichnungsmaterial und hierüber auch die Bragg-Ebenen, so dass das Volumenhologramm vollständig vollflächig rekonstruiert. Ein so belichtetes Volumenhologramm bzw. ausgestaltetes Sicherheitselement lässt sich beispielsweise ohne eine entsprechende Beaufschlagung der mindestens zwei Elektroden mit den vorgegebenen Ladungsmengen nicht über eine Kontaktkopie replizieren.

Ebenso ist es möglich, eine Beaufschlagung der mindestens zwei Elektroden mit Ladungen zu verwenden, um lokale Verformungen des Aufzeichnungsmaterials zu bewirken und hierüber zu erreichen, dass das Volumenhologramm zumindest lokal nicht vollständig unter einer vorgegebenen Rekonstruktionsgeometrie rekonstruiert. In einem solchen Fall rekonstruiert das Volumenhologramm vorzugsweise vollständig vollflächig, wenn die mindestens zwei Elektroden nicht mit Ladungen beaufschlagt sind. Werden die mindestens zwei Elektroden hingegen mit Ladungen beaufschlagt, so führt dies zumindest lokal zu einer Verformung des Aufzeichnungsmaterials und hierüber zu einer Verformung der Bragg-Ebenen,so dass lokal eine optimale Rekonstruktion des Volumenhologramms unter der vorgegebenen Rekonstruktionsgeometrie nicht stattfindet. Eine Rekonstruktionsgeometrie ist durch einen Lichteinfallswinkel relativ zu einer Oberfläche des Sicherheitselements sowie gegebenenfalls durch eine Wellenlänge des für die Rekonstruktion verwendeten Lichts festgelegt. Als eine lokal optimale Rekonstruktion wird eine Rekonstruktion angesehen, bei der an dem betrachteten Ort des Volumenhologramms eine dort lokal maximal erreichbare Beugungseffizienz erreicht wird.

Bei einer bevorzugten Weiterbildung der Erfindung ist vorgesehen, dass mindestens eine der mindestens zwei Elektroden und weitere Elektroden in einer Ebene in einem zweidimensionalen, vorzugsweise regelmäßigen, besonders bevorzugt Spalten und Zeilen aufweisenden, Muster als so genannte erste Elektroden angeordnet sind und gemeinsam oder getrennt mit Ladungen beaufschlagbar sind. Die ersten Elektroden können eine gemeinsame Gegenelektrode besitzen. Diese ist auf einer gegenüberliegenden Seite des Aufzeichnungsmaterials zu jener Seite angeordnet, auf der sich die Ebene befindet, in der die ersten Elektroden angeordnet sind.

Bei einer anderen vorteilhaften Ausführungsform ist vorgesehen, dass jeder der ersten Elektroden eine Gegenelektrode zugeordnet ist, so dass Elektrodenpaare aus jeweils einer ersten Elektrode und einer Gegenelektrode existieren. Hierbei sind vorzugsweise die ersten Elektroden auf einer Seite des Aufzeichnungsmaterials und die Gegenelektroden auf einer gegenüberliegenden Seite des Aufzeichnungsmaterials angeordnet.

Um eine Anzahl von elektrischen Anschlüssen gering zu halten und dennoch gezielt einzelne Elektrodenpaare mit Ladung beaufschlagen zu können, ist bei einer bevorzugten Weiterbildung der Erfindung vorgesehen, dass die ersten Elektroden in ersten Gruppen und die Gegenelektroden in zweiten Gruppen elektrisch leitend miteinander verbunden sind, so dass selektiv eine Beaufschlagung der ersten Elektrode und der Gegenelektrode eines ausgewählten Elektrodenpaars mit Ladungen möglich ist. Es wird somit möglich, eine Anzeigematrix zu bilden, mit der sich beliebige, individuelle Muster, Bilder oder Textinformation usw., darstellen lassen.

Um eine optische Rekonstruktion des Volumenhologramms durch die mindestens zwei Elektroden nicht nachteilig zu beeinflussen, ist vorgesehen, dass mindestens eine der mindestens zwei Elektroden und/oder die ersten Elektroden transparent für Licht sind. Je nach Ausführungsform kann dieses auch eine Transparenz im UV- und IR-Bereich einschließen. Um mit einer Elektrode einen flächig großen Bereich des holografischen Aufzeichnungsmaterials verformen zu können, weist mindestens eine der mindestens zwei Elektroden Aussparungen und/oder Einkerbungen auf. Die mindestens eine der mindestens zwei Elektroden kann beispielsweise kammartig ausgebildet sein. Die Zähne liegen hierbei vorzugsweise flächig an dem elastischen Element an. Durch eine Beaufschlagung mit Ladung kann erreicht werden, dass sich die Zähne quasi quer zu ihrer Ausrichtung senkrecht zu einer Oberfläche des holografischen Aufzeichnungsmaterials bewegen. Das holografische Aufzeichnungsmaterial weicht an den Stellen, an denen sich die Zähne befinden, zurück, während des in den Zahnzwischenräumen gar nicht oder weniger stark zurückweicht. Das holografische Aufzeichnungsmaterial wird somit im Bereich der Zähne des Kamms eine wellenartige Struktur einnehmen. Dies bedeutet, dass das Volumenhologramm in diesem wellenartigen Bereich quasi nicht mehr oder mit geringerer Beugungseffizienz rekonstruiert. Dies bedeutet, dass zwar gegebenenfalls einige lokal begrenzte Streifen eine Rekonstruktionsgeometrie erfüllen, die restlichen Bereiche jedoch nicht.

Bei einer Ausführungsform sind die ersten Elektroden und/oder die Gegenelektroden jeweils unterschiedlich ausgestaltet, insbesondere hinsichtlich ihrer Fläche und/oder Form. Darüber hinaus können mehrere erste Elektroden oder alle ersten Elektroden elektrisch leitend miteinander verbunden sein, so dass sie in Gruppen oder alle gemeinsam mit Ladung beaufschlagbar sind. Hierüber kann erreicht werden, dass die verformten Bereiche des Aufzeichnungsmaterials, d. h. des Volumenhologramms, ein grafisches Muster darstellen, welches leicht verifizierbar ist. Ein Beaufschlagen der ersten Elektrode, einer Gruppe erster Elektroden und/oder einer Gruppe der Gegenelektroden mit Ladung bewirkt somit, dass die Bereiche des Hologramms, die rekonstruieren (nicht rekonstruieren), ein vorgegebenes Muster darstellen. Dieses Muster kann beispielsweise ein Logo sein. Ebenso ist es möglich, dass dieses Muster individualisierend für das entsprechende Sicherheitselement ist. Dies bedeutet, dass die einzelnen ersten Elektroden und/oder zweiten Elektroden so angeordnet, ausgestaltet und/oder miteinander elektrisch leitend verbunden werden können, dass über eine Beaufschlagung mit Ladung ein individualisierendes Muster des Volumenhologramms rekonstruiert (nicht rekonstruiert). Hierdurch werden eine Verfälschung und/oder eine Duplizierung des Sicherheitselements erheblich erschwert.

Bei der Herstellung kann eine Individualisierung der mindestens zwei Elektroden oder einer der mindestens zwei Elektroden beispielsweise über eine Laserablation erfolgen. Die Elektroden können beliebige Formen annehmen. Somit können beispielsweise biometrische, biografische personalisierende Informationen in der Form der mindestens zwei Elektroden gespeichert werden. Wird zunächst eine Vielzahl von ersten Elektroden hergestellt, die in einem regelmäßigen Muster angeordnet sind und vorzugsweise eine gleiche Form aufweisen und miteinander elektrisch leitend, beispielsweise netzartig oder "stegförmig", verbunden sind, so genügt es für eine Individualisierung, gezielt die leitenden Verbindungen zu zerstören, um ein pixeliertes individualisiertes Gesamtmuster der Elektroden herzustellen.

Die Elektroden können auch mittels Photolithographie, Aufdampfen, Sputtern, Spincoating oder Druckverfahren (Siebdruck, Tintenstrahldruck, Offsetdruck, Tiefdruck usw.) ausgeformt und hergestellt werden.

Das holografische Aufzeichnungsmaterial,kann auf beliebige Weise in das Sicherheitselement eingebracht werden. Es kann auf eine Elektrode oder eine Gegenelektrode oder ein elastisches Element geklebt werden, einlaminiert werden usw. Das holografische Aufzeichnungsmaterial kann auf einer oder auf beiden Seiten mit der darüber bzw. darunter angeordneten Einheit (elastisches Element, Elektrode und/oder Gegenelektrode) fest verbunden sein.

Das mindestens eine elastische Element kann in Form eines Elastomers auf beliebige Weise zwischen die Elektroden und das holografische Aufzeichnungsmaterial gefügt werden. Beispielsweise kann das elastische Element auf beliebige Weise aufgetragen, beispielsweise aufgesprüht, aufgeklebt, einlaminiert, aber auch mittels Spincoatens aufgebracht, aufgedruckt usw. werden.

Über ein Anlegen einer Spannung bzw. eine Beaufschlagung mit Ladung kann eine Verformung des Hologramms im Bereich des individualisierten Gesamtmusters der Elektroden und somit eine Veränderung der Rekonstruktion bewirkt werden.

Durch eine transparente Ausgestaltung der mindestens zwei Elektroden, beispielsweise indem transparente Metalloxide wie Indiumzinnoxid (SnO₂) ITO, Indiumzinkoxid, ZnO, Antimonzinnoxid (ATO) oder organische Materialien wie PEDOT/PSS, Pani®, Orgacon® als Elektrodenmaterial verwendet wird, kann darüber hinaus erreicht werden, dass die Elektrodenstruktur für einen Fälscher nur schwer oder gar nicht ermittelbar ist.

Insbesondere, wenn das Volumenhologramm so ausgebildet ist, dass es nur vollständig rekonstruiert, wenn das holografische Aufzeichnungsmaterial in einer vorgegebenen Weise verformt ist, ist eine Auswahl der zu beaufschlagenden Elektroden und eine Auswahl der entsprechend benötigten Ladungsmengen einzuhalten, um eine entsprechende Verformung herbeizuführen. Die entsprechenden benötigten Angaben können beispielsweise in dem Volumenhologramm, beispielsweise in Teilen des Volumenhologramms, codiert sein, die auch ohne eine Verformung des holografischen Aufzeichnungsmaterials rekonstruieren. Zusätzlich können diese Informationen mittels herkömmlicher drucktechnischer Verfahren auf das Sicherheitselement aufgebracht werden oder beispielsweise in einem elektronischen Speicher abgelegt sein, der als zusätzliches Sicherheitselement in das Sicherheitselement integriert ist.

Die Merkmale des erfindungsgemäßen Verfahrens weisen dieselben Vorteile wie die entsprechenden Merkmale des erfindungsgemäßen Sicherheitselements auf.

Nachfolgend wird die Erfindung anhand bevorzugter Ausführungsbeispiele näher erläutert.
- Fig. 1a: eine schematische Schnittansicht eines Sicherheitselements ohne eine Beaufschlagung mit Ladungen;
- Fig. 1b: eine Schnittansicht des Sicherheitselements nach Fig. 1a mit einer Beaufschlagung der Elektroden mit Ladung;
- Fig. 1c: eine Ansicht einer Rekonstruktion des in dem Sicherheitselement nach Fig. 1a gespeicherten Hologramms im unbeaufschlagten Zustand;
- Fig. 1d: eine Ansicht des Hologramms bei einer Rekonstruktion während einer Beaufschlagung der Elektroden mit Ladung;
- Fig. 2a: eine Schnittansicht eines weiteren Sicherheitselements;
- Fig. 2b: eine Draufsicht auf das weitere Sicherheitselement nach Fig. 2a;
- Fig. 3a: eine schematische Schnittansicht einer weiteren Ausführungsform eines Sicherheitselements;
- Fig. 3b: eine Draufsicht auf die weitere Ausführungsform nach Fig. 3a;
- Fig. 3c: eine Schnittansicht der weiteren Ausführungsform nach Fig. 3a, wobei die Elektroden mit Ladung beaufschlagt sind; und
- Fig. 4: eine schematische Darstellung einer Draufsicht auf eine Ausführungsform eines Sicherheitselements, bei dem erste Elektroden und Gegenelektroden in einem matrixartigen Muster angeordnet sind.

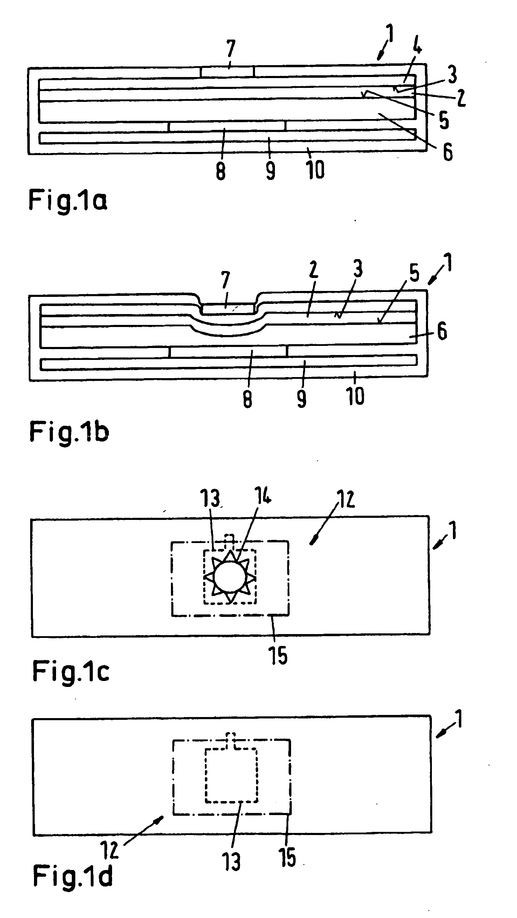

In Fig. 1 ist schematisch ein Sicherheitselement 1 in einer Schnittdarstellung gezeigt. Das Sicherheitselement 1 umfasst ein holografisches Aufzeichnungsmaterial 2, in dem ein Volumenhologramm gespeichert ist. Dies bedeutet, dass das in dem holografischen Aufzeichnungsmaterial gespeicherte Hologramm ein so genanntes optisches dickes Hologramm ist, so dass dieses sowohl eine hohe Winkelselektivität als auch Wellenlängenselektivität aufweist. An eine erste Seite 3 des holografischen Aufzeichnungsmaterials 2 grenzt ein elastisches Element 4 an, welches vorzugsweise aus einem Elastomer besteht. Als geeignete Elastomere können verwendet werden: Siloxanbasierte Materialien, beispielsweise aus quervemetztem Polydimethylsiloxan oder verwandten Polyalkylsiloxanen oder verwandten Polyarylsiloxanen. In einer weiteren bevorzugten Ausführungsvariante umfasst das elastische Element quervernetzbares Polyurethan und/oder ein Fluoroelastomer. Ebenso sind schwefelvemetzte Elastomere auf Basis von Butadien sowie Isopren und Acrylnitril geeignet. Weitere mögliche Materialien für das elastische Element sind physikalisch quervernetzte Elastomere. Diese Materialien können z. B. aus Materialklassen wie Block-Copolymeren und Polystyrol mit entweder Polybutadien, Polyisopren oder Polyisobutylen ausgewählt werden. Die genannten Materialien können durch Zugabe geeigneter Weichmacher wie z. B. Squalan im elastischen Modulus modifiziert werden. An einer gegenüberliegenden Seite 5 zu der ersten Seite 3 des holografischen Aufzeichnungsmaterials 2 grenzt ein weiteres elastisches Element 6 an, welches ebenfalls vorzugsweise aus einem der oben aufgeführten Elastomere hergestellt ist.

Das Sicherheitselement 1 umfasst ferner mindestens zwei Elektroden, hier eine erste Elektrode 7, die an das elastische Element 4 angrenzt, und eine Gegenelektrode 8, die an das weitere elastische Element 6 angrenzt. Bei der dargestellten Ausführungsform nach Fig. 1 ist somit zwischen der ersten Elektrode 7 und dem holografischen Aufzeichnungsmaterial 2 das elastische Element 4 angeordnet. Zwischen der Gegenelektrode 8 und dem holografischen Aufzeichnungsmaterial 2 befindet sich das weitere elastische Element 6. Bei anderen Ausführungsformen kann entweder das elastische Element 4 oder das weitere elastische Element 6 fehlen. Bei wieder anderen Ausführungsformen können das elastische Element 4 und das weitere elastische Element 6 gemeinsam als ein elastisches Element ausgebildet sein, welches zumindest lokal sowohl an die erste Seite 3 als auch an die gegenüberliegende Seite 5 angrenzt.

Bei der dargestellten Ausführungsform sind die erste Elektrode 7 und die Gegenelektrode 8 hinsichtlich ihrer flächigen Ausdehnung parallel zu einer Ebene, in der sich das holografische Aufzeichnungsmaterial im Wesentlichen erstreckt, nicht gleich. Bei der dargestellten Ausführungsform ist die Gegenelektrode 8 ferner auf einer Substratschicht 9 aufgebracht, die vorzugsweise nur schwer zu verformen ist. Grundsätzlich könnte die Substratschicht 9 jedoch auch verformbar sein. Die beschriebenen Bestandteile des Sicherheitselements 1 sind vorzugsweise in einem Sicherheitselementkörper 10 integriert. Die mindestens zwei Elektroden, die erste Elektrode 7 und die Gegenelektrode 8, sind so in dem Sicherheitselement 1 angeordnet, dass sie mit Ladung beaufschlagbar sind. Beispielsweise kann eine Spannungsquelle zwischen die erste Elektrode 7 und die Gegenelektrode 8 angelegt werden. Hierdurch wird bewirkt, dass beispielsweise die erste Elektrode 7 einen Überschuss an Ladungsträgern einer ersten Ladungsart erhält und an der Gegenelektrode 8 eine Verarmung der Ladungsträger der ersten Art auftritt bzw. eine Zunahme von Ladungsträgern einer entgegengesetzt geladenen Art auftritt. Die erste Elektrode 7 und die Gegenelektrode 8 werden somit entgegengesetzt aufgeladen und ziehen sich somit an.

Dieser Zustand ist in Fig. 1b dargestellt. Identische technische Merkmale sind mit denselben Bezugszeichen versehen. Zu erkennen ist, dass sich die erste Elektrode 7 der Gegenelektrode 8 angenähert hat, d. h. ein Abstand 11 zwischen diesen verringert ist. Hierbei ist die erste Elektrode 7 in das elastische Element 4 "eingedrungen" und hat dieses lokal verformt. Diese Verformung hat sich auf das holografische Aufzeichnungsmaterial übertragen, welches ebenfalls lokal verformt ist. Hierbei weicht das holografische Aufzeichnungsmaterial in das weitere elastische Element 5 aus und "dringt" in dieses ein. Das weitere elastische Element 6 ist somit ebenfalls verformt. Bei der dargestellten Ausführungsform ist die Gegenelektrode 8 mit dem schwer verformbaren Substrat 9 fest verbunden, beispielsweise verklebt, oder auf dieses aufgedampft, so dass die Gegenelektrode 8 nicht in das weitere elastische Element 5 eindringt. Bei anderen Ausführungsformen der Erfindung kann vorgesehen sein, dass sowohl die erste Elektrode 7 als auch die Gegenelektrode 8 jeweils in das elastische Element 4 bzw. das weitere elastische Element 6 "eindringen". Der Effekt, dass lediglich die erste Elektrode 7 in das elastische Element 4, die Gegenelektrode 8 jedoch nicht oder nur sehr wenig in das weitere elastische Element 6 eindringt, wird dadurch unterstützt, dass eine flächige Ausdehnung der Gegenelektrode 8 parallel zum schichtförmig ausgebildeten holografischen Aufzeichnungsmaterial 2 größer ist als eine entsprechende flächige Ausdehnung der ersten Elektrode 7. Auf diese Weise ergibt sich die visuelle Änderung des Hologramms.

In Fig. 1c ist eine Ansicht der Rekonstruktion des in dem holografischen Aufzeichnungsmaterial 2 gespeicherten Hologramms 12 dargestellt, wobei die erste Elektrode 7 und die Gegenelektrode 8 nicht mit einer Ladung beaufschlagt sind bzw. keine Spannung an die Elektroden angelegt ist. Deutlich zu erkennen ist, dass in dem Bereich, in dem die erste Elektrode 7 ausgebildet ist, deren Ausdehnung durch eine gestrichelte Linie 13 angezeigt ist, eine in dem Hologramm 12 gespeicherte geometrische Struktur 14 sichtbar ist. Eine Ausdehnung der Gegenelektrode 8 ist durch eine Strichpunktlinie 15 angedeutet.

In Fig. 1d ist die Ansicht dargestellt, die man bei einer Rekonstruktion des Hologramms 12 erhält, wenn die erste Elektrode 7 und die Gegenelektrode 8 mit einer Ladung beaufschlagt sind, wie dies in Fig. 1b dargestellt ist. Deutlich zu erkennen ist in Fig. 1d, dass die geometrische Struktur 14, welche in Fig. 1c zu erkennen ist, nicht rekonstruiert. Dies hat seine Ursache darin, dass das holografische Aufzeichnungsmaterial 2 in dem Bereich, in dem die geometrische Struktur 14 gespeichert ist, so verformt ist, dass eine Rekonstruktionsbedingung nicht mehr gegeben ist. Dies bedeutet, dass die Bragg-Ebenen so verformt sind, dass eine Beugung des zur Rekonstruktion verwendeten Lichts nicht in der Weise stattfindet, dass die geometrische Struktur 14 nach Fig. 1c rekonstruiert wird. Es versteht sich für den Fachmann, dass die in Fig. 1d gezeigte Darstellung lediglich schematisch und idealisiert ist. Ebenso wäre es denkbar, dass eine Veränderung der Rekonstruktionsbedingungen auch nur in einem Bereich auftritt, der mit dem Umriss der ersten Elektrode 7 und/oder Gegenelektrode 8 korrespondiert.

Durch die Verformung des holografischen Aufzeichnungsmaterials aufgrund der Beaufschlagung der mindestens zwei Elektroden mit Ladung bzw. ein Anlegen einer Gleichspannung oder einer Wechselspannung, können auch andere optische Veränderungen ausgelöst werden. Nicht in jedem Fall unterbleibt eine Rekonstruktion vollständig. Andere Effekte, die bewirkt werden können, umfassen beispielsweise eine Verschiebung der Wellenlänge, bei der das Hologramm rekonstruiert. In einem solchen Fall ergibt sich also eine visuelle Änderung des Hologramms zum Beispiel in Form einer Farbverschiebung. Bei einer Betrachtung der Rekonstruktion können also "Löcher", "Rahmen", Farbverschiebungen usw. als optisch wahrnehmbare Veränderungen auftreten.

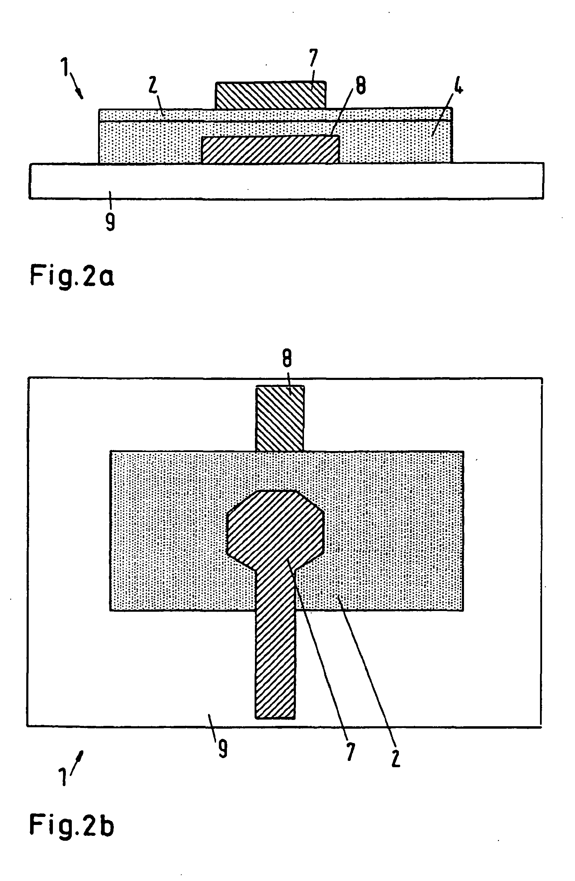

In Fig. 2a und 2b sind eine schematische Schnittansicht und eine schematische Draufsicht auf eine andere Ausführungsform eines Sicherheitselements dargestellt. Ähnliche technische Merkmale sind mit identischen Bezugszeichen wie in den Fig. 1a bis 1d versehen. Bei dieser Ausführungsform grenzt die erste Elektrode 7 unmittelbar an das holografische Aufzeichnungsmaterial 2 an. Das elastische Element 4 ist somit zwischen dem holografischen Aufzeichnungsmaterial 2 und der Gegenelektrode 8 angeordnet. Diese ist erneut auf einem Substrat 9 befestigt. Bei einer Beaufschlagung mit Ladungen oder Spannung wirkt erneut eine anziehende oder abstoßende Kraft zwischen der ersten Elektrode 7 und der Gegenelektrode 8. Dieses führt dazu, dass das holografische Aufzeichnungsmaterial 2 verformt wird und beispielsweise in das elastische Element 4 "eindringt". Durch eine Form und Größe der mindestens zwei Elektroden, der ersten Elektrode 7 und der Gegenelektrode 8, kann eine Form des Bereichs festgelegt werden, in dem eine optisch wahrnehmbare Änderung bei einer Rekonstruktion des Hologramms bei Anlegen einer Spannung an die mindestens zwei Elektroden und/oder bei einer Beaufschlagung der Elektroden mit einer Ladung erfolgt. Das Hologramm kann in dem holografischen Aufzeichnungsmaterial so gespeichert werden, dass dieses nur vollständig rekonstruiert, wenn die mindestens zwei Elektroden, die erste Elektrode 7 und die Gegenelektrode 8, mit einer vorgegebenen Spannung oder einer vorgegebenen Ladung beaufschlagt werden. Um dieses zu erreichen, wird das holografische Aufzeichnungsmaterial beispielsweise während einer Belichtung des Hologramms in das Aufzeichnungsmaterial entsprechend verformt. Hierbei ist zu berücksichtigen, dass das holografische Aufzeichnungsmaterial sich in der Regel bei einem Entwicklungsprozess hinsichtlich seiner räumlichen Ausdehnung verändert, in der Regel schrumpft.

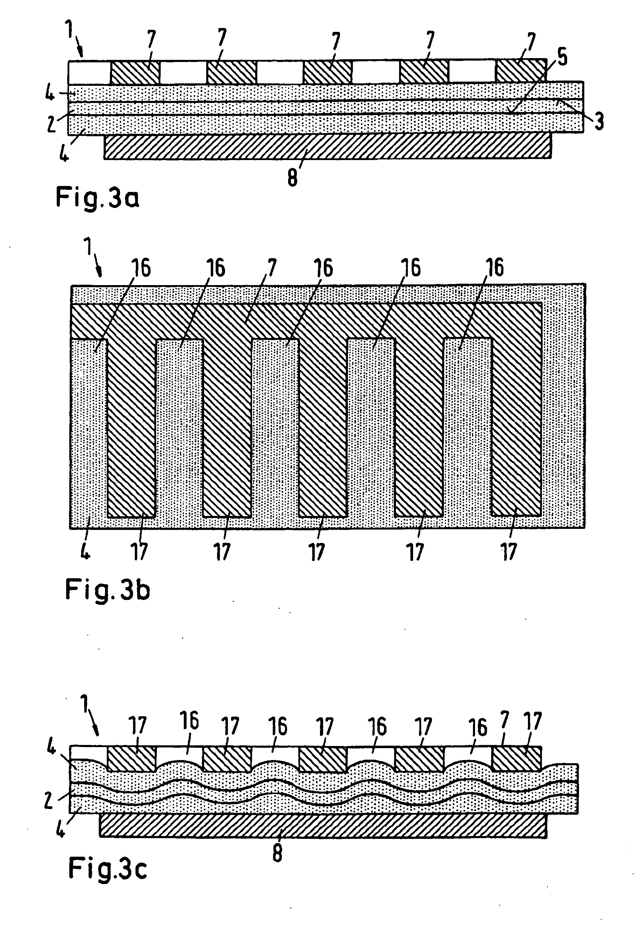

In Fig. 3a und 3b sind schematische Ansichten einer weiteren Ausführungsform eines Sicherheitselements 1 als Schnittansicht (Fig. 3a) und Draufsicht (Fig. 3b) dargestellt. Die erste Elektrode 7 ist bei dieser Ausführungsform kammartig ausgebildet. Die Gegenelektrode 8 ist hingegen vollflächig rechteckig ausgebildet. Bei einer anderen Ausführungsform kann die Gegenelektrode als komplementär ausgebildeter Kamm ausgebildet sein. Bei der dargestellten Ausführungsform umgibt das elastische Element 4 das holografische Aufzeichnungsmaterial sowohl auf der ersten Seite 3 als auch auf der gegenüberliegenden Seite 5 des Aufzeichnungsmaterials 2. Dieses ist somit vollständig in das elastische Element 4 eingebettet. In anderen Ausführungsformen kann das holografische Aufzeichnungsmaterial auch zwischen zwei getrennt ausgebildeten, gegebenenfalls aus gleichem oder auch unterschiedlichem Material bestehenden, elastischen Elementen ähnlich wie in Fig. 1a angeordnet sein und mit einer der Schichten oder beiden Schichten beispielsweise über einen Haftvermittler, Kleber oder Ähnliches verbunden sein. Zähne 17 oder Zinken der ersten Elektrode 7 erstrecken sich parallel zu dem holografischen Aufzeichnungsmaterial 2.

In Fig. 3c ist die weitere Ausführungsform nach Fig. 3a und 3b in einem Zustand dargestellt, in dem die erste Elektrode 7 und die Gegenelektrode 8 mit einer Spannung bzw. Ladung beaufschlagt sind. Durch die Aussparungen 16 zwischen den Zähnen 17 der kammartig ausgebildeten ersten Elektrode 7 kann ein Teil des elastischen Elements 4 emporquellen, wenn sich die erste Elektrode 7 und die Gegenelektrode 8 einander annähern. Das holografische Aufzeichnungsmaterial nimmt eine wellenartige Struktur ein, so dass eine Rekonstruktion, die im nicht beaufschlagten Zustand, wie er in Fig. 3a dargestellt ist, stattfand, nicht mehr erfolgt.

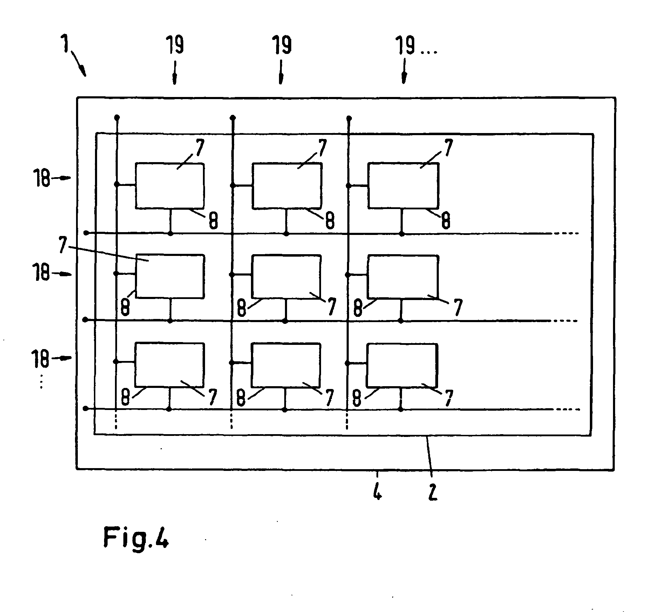

In Fig. 4 ist eine weitere Ausführungsform eines Sicherheitselements schematisch dargestellt, bei der die ersten Elektroden in einer Ebene angeordnet sind. In Fig. 4 ist eine Draufsicht auf ein Sicherheitselement 1 dargestellt. Die ersten Elektroden 7 sind in einem matrixartigen Muster, welches Zeilen 18 und Spalten 19 aufweist, angeordnet. Die Gegenelektroden 8, die bei dieser Ausführungsform dieselben flächigen Abmessungen wie die ersten Elektroden 7 aufweisen und unterhalb der ersten Elektroden 7 angeordnet sind, sind somit ebenfalls in Zeilen 18 und Spalten 19 angeordnet. Zwischen den ersten Elektroden 7 und den Gegenelektroden 8 ist das holografische Aufzeichnungsmaterial 2 eingebettet in das elastische Element 4 angeordnet. Die ersten Elektroden 7 sind jeweils zeilenweise elektrisch leitend miteinander verbunden. Die Gegenelektroden 8 sind hingegen spaltenweise elektrisch leitend miteinander verbunden. Hierdurch ist es möglich, ein Erste-Elektrode-Gegenelektrode-Paar selektiv über eine Beaufschlagung einer Zeile und einer entsprechenden Spalte mit einer Ladung oder einer Spannung zu adressieren. Hierdurch kann eine gezielte Region des Hologramms hinsichtlich einer Rekonstruktion beeinflusst werden. Es ist somit möglich, eine Anzeigematrix zu bilden, mit der sich beliebige, individuelle Muster, Bilder oder Textinformation usw., darstellen lassen.

Bei anderen Ausführungsformen können sich die Formen und flächigen Ausdehnungen der ersten Elektroden und/oder der zweiten Elektroden jeweils unterscheiden. Hierüber ist es möglich, unterschiedliche geometrische Formen durch eine Adressierung eines einzelnen Erste-Elektrode-Gegenelektrode-Paares bei einer Rekonstruktion zu beeinflussen. Darüber hinaus ist es möglich, Gruppen von ersten Elektroden und/oder Gruppen von Gegenelektroden elektrisch leitend zu verbinden, so dass durch eine Beaufschlagung mit einer oder mehreren Spannungen bzw. unterschiedlichen Ladungsmengen eine Rekonstruktion an unterschiedlichen Stellen, die ein Muster ergeben, zu beeinflussen.

Bei allen beschriebenen Ausführungsformen versteht es sich für den Fachmann, dass zumindest die ersten Elektroden oder die Gegenelektroden transparent ausgebildet sind, beispielsweise aus transparenten Metalloxiden wie Indiumzinnoxid (SnO₂) ITO, Indiumzinkoxid, ZnO, Antimonzinnoxid (ATO) oder organischen Materialien wie PEDOT/PSS, Pani®, Orgacon® aus Indiumzinnoxid (ITO) hergestellt sind. Für den Fall, dass das gespeicherte Hologramm ein Transmissionshologramm ist, ist bei einer Ausführungsform vorgesehen, dass sowohl die ersten Elektroden als auch die Gegenelektroden transparent ausgestaltet sind. Die Rekonstruktion des Hologramms wird an einer gegenüberliegenden Seite zu der Beleuchtungsseite beobachtet oder nachgewiesen. Bei einer anderen Ausführungsform ist eine reflektierende Schicht vorgesehen, um das rekonstruierte Transmissionshologramm durch das holografische Aufzeichnungsmaterial zurückzureflektieren, so dass es auf der Seite beobachtbar oder nachweisbar ist, von der aus das Sicherheitselement beleuchtet wird. Die Reflexion kann beispielsweise in einer Metallschicht oder einer reflektierenden Form erfolgen.

Bei einer Ausführungsform dient die Gegenelektrode als Reflektionselement. In diesem Falle ist die Gegenelektrode vorzugsweise aus Metall ausgebildet.

Allgemein können die Elektroden beispielsweise mittels eines Photolithografieverfahrens, Spincoating, eines Druckverfahrens (beispielsweise Siebdruck, Tintenstrahldruck, Offsetdruck, Tiefdruck usw.) oder Vakuumbedampfen oder Sputtern mit Metallen hergestellt werden. Ferner kann eine Formung durch Laserablation ausgeführt werden.

Sowohl über eine Form als auch eine Gruppierung der ersten Elektroden und/oder Gegenelektroden kann eine Individualisierung des Sicherheitselements erfolgen.

Umfasst das Sicherheitselement mehrere erste Elektroden und/oder mehrere Gegenelektroden, so ist es möglich, das Hologramm so zu belichten, dass eine vorgegebene Verformung des holografischen Aufzeichnungsmaterials erforderlich ist, um eine vollflächige vollständige Rekonstruktion des Hologramms zu erreichen. Hierfür kann es erforderlich sein, Unterschiedliche der mehreren ersten Elektroden und/oder Gegenelektroden mit unterschiedlichen Spannungen und/oder unterschiedlichen Ladungsmengen zu beaufschlagen. Die notwendigen Informationen hierfür können beispielsweise in dem Sicherheitselement, vorzugsweise in dem Hologramm, besonders bevorzugt codiert, abgelegt werden. Vorzugsweise werden diese Informationen so codiert in dem Hologramm abgelegt, dass diese in einem Zustand rekonstruieren, in dem die ersten Elektroden und/oder Gegenelektroden nicht mit Spannungen und/oder Ladungen beaufschlagt sind. Alternativ und/oder zusätzlich können solche Informationen auch auf andere Weise, beispielsweise durch einen Aufdruck alphanumerischer Zeichen und/oder eines Strichcodes, auf dem Sicherheitselement 1 abgelegt werden. Ebenso ist es möglich, diese Informationen in einem elektronischen Speicherelement abzulegen, welches in das Sicherheitselement integriert wird.

Es versteht sich für den Fachmann, dass die beschriebenen schematischen Strukturen durch weitere Elemente und zusätzliche Sicherheitsmerkmale ergänzt werden können. Die beschriebenen Sicherheitselemente können beispielsweise in ein Sicherheitsdokument, welches mittels Lamination mehrerer Schichten hergestellt wird, eingebracht werden. Ebenso ist es möglich, das Sicherheitselement so auszugestalten, dass es auf ein Sicherheitsdokument aufgeklebt wird.

Eine Beaufschlagung mit Spannung und/oder Ladungen kann auch zeitlich variierend erfolgen. Hierdurch kann erreicht werden, dass das holografische Aufzeichnungsmaterial in eine Schwingung versetzt wird. Im schwingenden Zustand ist eine Rekonstruktion des Hologramms zumindest in dem schwingenden Bereich gestört oder vollständig unmöglich.

Die beschriebenen Ausführungsformen sind lediglich beispielhaft. Die in den einzelnen Ausführungsbeispielen beschriebenen Merkmale können in beliebiger Kombination verwendet werden, um die Erfindung auszuführen.

### Bezugszeichenliste

| | |
|---|---|
| 1 | Sicherheitselement |
| 2 | holografisches Aufzeichnungsmaterial |
| 3 | erste Seite |
| 4 | elastisches Element |
| 5 | gegenüberliegende Seite |
| 6 | weiteres elastisches Element |
| 7 | erste Elektrode |
| 8 | Gegenelektrode |
| 9 | Substratschicht |
| 10 | Sicherheitselementkörper |
| 11 | Abstand |
| 12 | Hologramm |
| 13 | gestrichelte Linie |
| 14 | geometrische Struktur |
| 15 | Strichpunktlinie |
| 16 | Aussparung |
| 17 | Zähne |
| 18 | Zeilen |
| 19 | Spalten |

## Patentansprüche

1. Sicherheitselement (1), umfassend ein Aufzeichnungsmaterial (2), in dem mindestens ein Volumenhologramm (12) gespeichert ist, und mindestens zwei voneinander getrennt ausgebildete Elektroden (7, 8), an die eine Spannung anlegbar ist und/oder die mit Ladungen beaufschlagbar sind, wobei die mindestens zwei Elektroden (7, 8) und das Aufzeichnungsmaterial (2) so ausgebildet und zueinander angeordnet sind, dass bei einem Anlegen der Spannung und/oder einer Beaufschlagung mit Ladungen zumindest eine lokale mechanische Veränderung, insbesondere Verformung, des Aufzeichnungsmaterials eintritt, so dass eine Rekonstruktion des Volumenhologramms zumindest lokal verändert ist,
**dadurch gekennzeichnet, dass**
mindestens ein elastisches Element (4) zwischen dem Aufzeichnungsmaterial (2) und einer der mindestens zwei Elektroden (7, 8) angeordnet ist.

2. Sicherheitselement (1) nach Anspruch 1, **dadurch gekennzeichnet, dass** das Aufzeichnungsmaterial (2) zumindest lokal zwischen dem mindestens einen elastischen Element (4) angeordnet ist, derart dass das elastische Element (4) das Aufzeichnungsmaterial (2) zumindest lokal auf einer ersten Seite (3) als auch auf einer gegenüberliegenden Seite (5) des Aufzeichnungsmaterials umgibt, oder das Aufzeichnungsmaterial (2) zumindest lokal zwischen dem mindestens einen elastischen Element (4) und einem weiteren elastischen Element (6) angeordnet ist.

3. Sicherheitselement (1) nach Anspruch 1 oder 2, **dadurch gekennzeichnet, dass** eine flächige Ausdehnung einer der mindestens zwei Elektroden (7, 8) kleiner als eine flächige Ausdehnung eines Speicherbereichs des mindestens einen Volumenhologramms (12) in dem Aufzeichnungsmaterial (2) ist.

4. Sicherheitselement (1) nach einem der Ansprüche 1 bis 3, **dadurch gekennzeichnet, dass** mindestens eine der mindestens zwei Elektroden (7, 8) Aussparungen (16) und/oder Einkerbungen umfasst.

5. Sicherheitselement (1) nach einem der Ansprüche 1 bis 4, **dadurch gekennzeichnet, dass** mindestens eine der mindestens zwei Elektroden (7, 8) und weitere Elektroden in einer Ebene in einem zweidimensionalen, vorzugsweise regelmäßigen, besonders bevorzugt Spalten (19) und Zeilen (18) aufweisenden, Muster als so genannte erste Elektroden (4) angeordnet sind, und mit einer oder mehreren Spannungen und/oder einer oder mehreren Ladungen beaufschlagbar sind.

6. Sicherheitselement (1) nach Anspruch 5, **dadurch gekennzeichnet, dass** mittels der in dem Muster angeordneten ersten Elektroden eine ansteuerbare Anzeigevorrichtung ausbildet ist.

7. Sicherheitselement (1) nach einem der Ansprüche 5 oder 6, **dadurch gekennzeichnet, dass** jeder der ersten Elektroden (7) eine Gegenelektrode (8) zugeordnet ist, so dass Elektrodenpaare aus jeweils einer ersten Elektrode (7) und einer Gegenelektrode (8) existieren.

8. Sicherheitselement (1) nach einem der Ansprüche 5 bis 7, **dadurch gekennzeichnet, dass** die ersten Elektroden (7) auf einer Seite des Aufzeichnungsmaterials (2) und die Gegenelektroden (8) auf einer gegenüberliegenden Seite des Aufzeichnungsmaterials (2) angeordnet sind.

9. Sicherheitselement (1) nach einem der vorangehenden Ansprüche, **dadurch gekennzeichnet, dass** mindestens eine der mindestens zwei Elektroden (7, 8) und/oder die ersten Elektroden (7) transparent für Licht sind.

10. Sicherheitselement (1) nach einem der vorangehenden Ansprüche, **dadurch gekennzeichnet, dass** eine flächige Ausdehnung der einen der mindestens zwei Elektroden (7, 8) sich von einer flächigen Ausdehnung der anderen der mindestens zwei Elektroden (7, 8) und/oder eine flächige Ausdehnung der ersten Elektroden (7) sich von einer flächigen Ausdehnung der Gegenelektroden (8) unterscheiden.

11. Verfahren zum Herstellen eines Sicherheitselements (1), umfassend die Schritte:
Bereitstellen eines Aufzeichnungsmaterials (2), in dem mindestens ein Volumenhologramm (12) gespeichert ist, und
Ausbilden von mindestens zwei voneinander getrennten Elektroden (7, 8), an die eine Spannung anlegbar ist,
wobei die mindestens zwei Elektroden (7, 8) und das Aufzeichnungsmaterial (2) so ausgebildet und zueinander angeordnet werden, dass bei einem Anlegen der Spannung zumindest eine lokale mechanische Veränderung, insbesondere Verformung, des Aufzeichnungsmaterials (2) eintritt, so dass eine Rekonstruktion des Volumenhologramms (12) zumindest lokal verändert ist, **dadurch gekennzeichnet, dass** mindestens ein elastisches Element (4) zwischen dem Aufzeichnungsmaterial (2) und einer der mindestens zwei Elektroden (7, 8) angeordnet wird.

12. Verfahren nach Anspruch 11, **dadurch gekennzeichnet, dass** das Aufzeichnungsmaterial (2) zumindest lokal zwischen dem mindestens einen elastischen Element (4) angeordnet wird, wobei zumindest lokal eine erste Seite (3) des Aufzeichnungsmaterials (2) als auch eine gegenüberliegende Seite (5) des Aufzeichnungsmaterials (2) von dem mindestens einen elastischen Element (4) umgeben wird, oder das Aufzeichnungsmaterial (2) zumindest lokal zwischen dem mindestens einen elastischen Element (4) und einem weiteren elastischen Element (6) angeordnet wird.

13. Verfahren nach Anspruch 11 oder 12 **dadurch gekennzeichnet, dass** mindestens eine der mindestens zwei Elektroden (7, 8) und weitere Elektroden in einer Ebene in einem zweidimensionalen, vorzugsweise regelmäßigen, besonders bevorzugt Spalten (19) und Zeilen (18) aufweisenden, Muster als so genannte erste Elektroden (7) angeordnet werden, und mit einer oder mehreren Spannungen oder mit Ladungen beaufschlagbar sind.

14. Verfahren nach Anspruch 13, **dadurch gekennzeichnet, dass** die Elektroden in einem Muster angeordnet werden, so dass über das Muster der Elektroden eine ansteuerbare Anzeigevorrichtung ausgebildet wird.

15. Verfahren nach einem der Ansprüche 11 bis 14, **dadurch gekennzeichnet, dass** jeder der ersten Elektroden (7) eine Gegenelektrode (8) zugeordnet wird, so dass Elektrodenpaare aus jeweils einer ersten Elektrode (4) und einer Gegenelektrode (8) erzeugt werden und die ersten Elektroden (7) auf einer Seite des Aufzeichnungsmaterials (2) und die Gegenelektroden (8) auf einer gegenüberliegenden Seite des Aufzeichnungsmaterials (2) angeordnet werden.

## Claims

1. Security element (1) comprising a recording material (2) in which at least one volume hologram (12) is stored, and at least two electrodes (7, 8) embodied separately from each other, on which a voltage can be applied and / or which can receive charges, wherein the at least two electrodes (7, 8) and the recording material (2) are embodied and arranged in relation to each other such that, when voltage is applied and / or during charging, the recording material undergoes at least one local mechanical modification, in particular deformation, such that a reconstruction of the volume hologram is modified at least locally, **characterised in that** at least one elastic element (4) is arranged between the recording material (2) and one of the at least two electrodes(7, 8).

2. Security element (1) according to claim 1, **characterised in that** the recording material (2) is arranged at least locally between the at least one elastic element (4) in such a way that the elastic element (4) surrounds the recording material (2) at least locally on a first side (3) and also on an opposite side (5) of the recording material, or the recording material (2) is arranged at least locally between the at least one elastic element (4) and a further elastic element (6).

3. Security element (1) according to claim 1 or 2, **characterised in that** a flat expansion of one of the at least two electrodes (7, 8) is smaller than a flat expansion of a storage area of the at least one volume hologram (12) in the recording material (2).

4. Security element (1) according to any one of claims 1 to 3, **characterised in that** at least one of the at least two electrodes (7, 8) has notches (16) and / or indentations.

5. Security element (1) according to any one of claims 1 to 4, **characterised in that** at least one of the at least two electrodes (7, 8) and other electrodes are arranged on a plane in a two-dimensional preferably regular pattern, particularly preferably having columns (19) and lines (18), as so-called first electrodes (4), and can receive one or more voltages and / or one or more charges.

6. Security element (1) according to claim 5, **characterised in that** by means of the first electrodes arranged in the pattern, a controllable display device is formed.

7. Security element (1) according to any one of claims 5 or 6, **characterised in that** each of the first electrodes (7) is allocated a counter-electrode (8) so that pairs of electrodes exist in each case of a first electrode (7) and a counter-electrode (8).

8. Security element (1) according to any one of claims 5 to 7, **characterised in that** the first electrodes (7) are arranged on one side of the recording material (2) and the counter-electrodes (8) on an opposite side of the recording material (2).

9. Security element (1) according to any one of the preceding claims, **characterised in that** at least one of the at least two electrodes (7, 8) and / or the first electrodes (7) are transparent to light.

10. Security element (1) according to any one of the preceding claims, **characterised in that** a flat expansion of one of the at least two electrodes (7, 8) differs from a flat expansion of the other of the at least two electrodes (7, 8), and / or a flat expansion of the first electrodes (7) differs from a flat expansion of the counter-electrodes (8).

11. Method for producing a security element (1) comprising the steps: provision of a recording material (2) in which at least one volume hologram (12) is stored, and the embodiment of at least two electrodes (7, 8) separately from each other, on which a voltage can be applied, wherein the at least two electrodes (7, 8) and the recording material (2) are embodied and arranged in relation to each other such that, when voltage is applied, the recording material (2) undergoes at least one local mechanical modification, in particular deformation, such that a reconstruction of the volume hologram (12) is modified at least locally, **characterised in that** at least one elastic element (4) is arranged between the recording material (2) and one of the at least two electrodes(7, 8).

12. Method according to claim 11, **characterised in that** the recording material (2) is arranged at least locally between the at least one elastic element (4) whereby at least locally a first side (3) of the recording material (2) and also an opposite side (5) of the recording material (2) is surrounded by the at least one elastic element (4), or the recording material (2) is arranged at least locally between the at least one elastic element (4) and a further elastic element (6).

13. Method according to claim 11 or 12, **characterised in that** at least one of the at least two electrodes (7, 8) and other electrodes are arranged on a plane in a two-dimensional, preferably regular pattern, particularly preferably having columns (19) and lines (18), as so-called first electrodes (4), and can receive one or more voltages or charges.

14. Method according to claim 13, **characterised in that** the electrodes are arranged in a pattern so that, by means of the pattern of electrodes, a controllable display device is formed.

15. Method according to any one of claims 11 to 14, **characterised in that** each of the first electrodes (7) is allocated a counter-electrode (8) so that pairs of electrodes in each case of a first electrode (4) and a counter-electrode (8) are created and the first electrodes (7) are arranged on one side of the recording material (2) and the counter-electrodes (8) on an opposite side of the recording material (2).

## Revendications

1. Elément de sécurité (1), pourvu d'un matériel d'enregistrement (2), dans lequel est enregistré au moins un hologramme de volume (12), et d'au moins deux électrodes (7, 8) formées séparément les unes des autres auxquelles on peut appliquer une tension et/ou fournir des charges, lesdites au moins deux électrodes (7, 8) et le matériel d'enregistrement (2) étant formés et disposés les uns par rapport aux autres de sorte que, en cas d'application de la tension et/ou en cas de fourniture de charges, se produise au moins une modification mécanique locale, en particulier une déformation, du matériel d'enregistrement de sorte qu'une reconstruction de l'hologramme de volume soit au moins modifiée localement,
**caractérisé en ce que**
au moins un élément élastique (4) est disposé entre le matériel d'enregistrement (2) et une desdites au moins deux électrodes (7, 8).

2. Elément de sécurité (1) selon la revendication 1, **caractérisé en ce que** le matériel d'enregistrement (2) est disposé au moins localement entre le ou les éléments élastiques (4) de manière telle que l'élément élastique (4) entoure le matériel d'enregistrement (2) au moins localement aussi bien sur un premier côté (3) que sur un côté opposé (5) du matériel d'enregistrement, ou que le matériel d'enregistrement (2) soit disposé au moins localement entre le ou les éléments élastiques (4) et un autre élément élastique (6).

3. Elément de sécurité (1) selon la revendication 1 ou 2, **caractérisé en ce qu'**une extension plane d'une desdites au moins deux électrodes (7, 8) est plus petite qu'une extension plane d'une zone de mémoire du ou des hologrammes de volume (12) dans le matériel d'enregistrement (2).

4. Elément de sécurité (1) selon l'une quelconque des revendications 1 à 3, **caractérisé en ce qu'**au moins une desdites au moins deux électrodes (7, 8) comportent des évidements (16) et/ou des rainures.

5. Elément de sécurité (1) selon l'une quelconque des revendications 1 à 4, **caractérisé en ce qu'**au moins une desdites au moins deux électrodes (7, 8) et d'autres électrodes sont disposées dans un plan dans un motif bidimensionnel, de préférence régulier, comportant plus préférentiellement des colonnes (19) et des lignes (18) en tant que dites premières électrodes (4) et auxquelles peuvent être appliquées une ou plusieurs tensions et/ou fournies une ou plusieurs charges.

6. Elément de sécurité (1) selon la revendication 5, **caractérisé en ce que**, au moyen de la première électrode disposée dans le motif est formé un dispositif d'affichage pouvant être commandé.

7. Elément de sécurité (1) selon la revendication 5 ou 6, **caractérisé en ce qu'**une contre-électrode (8) est associée à chacune des premières électrodes (7) de sorte qu'existent des paires d'électrodes composées respectivement d'une première électrode (7) et d'une contre-électrode (8).

8. Elément de sécurité (1) selon la revendication 5 à 7, **caractérisé en ce que** les premières électrodes (7) sont disposées sur un côté du matériel d'enregistrement (2) et que les contre-électrodes (8) sont disposées sur un côté opposé du matériel d'enregistrement (2).

9. Elément de sécurité (1) selon l'une quelconque des revendications précédentes, **caractérisé en ce qu'**au moins une desdites au moins deux électrodes (7, 8) et/ou les premières électrodes (7) sont transparentes à la lumière.

10. Elément de sécurité (1) selon l'une quelconque des revendications précédentes, **caractérisé en ce qu'**une extension plane d'une desdites au moins deux électrodes (7, 8) se différencie d'une extension plane de l'autre desdites au moins deux électrodes (7, 8) et/ou une extension plane des premières électrodes (7) se différencie d'une extension plane des contre-électrodes (8).

11. Procédé de fabrication d'un élément de sécurité (1), comportant les étapes :
fourniture d'un matériel d'enregistrement (2) dans lequel est enregistré au moins hologramme de volume (12) et
formation d'au moins deux électrodes (7, 8) séparément les unes des autres auxquelles on peut appliquer une tension,
lesdites au moins deux électrodes (7, 8) et le matériel d'enregistrement (2) étant formés et disposés les uns par rapport aux autres de sorte que, en cas d'application de la tension, se produise au moins une modification mécanique locale, en particulier une déformation, du matériel d'enregistrement (2) de sorte qu'une reconstruction de l'hologramme de volume (12) soit au moins modifiée localement, **caractérisé en ce qu'**au moins un élément élastique (4) est disposé entre le matériel d'enregistrement (2) et une desdites au moins deux électrodes (7, 8).

12. Procédé selon la revendication 11, **caractérisé en ce que** le matériel d'enregistrement (2) est disposé au moins localement entre le ou les éléments élastiques (4), au moins localement aussi bien un premier côté (3) du matériel d'enregistrement (2) qu'un côté opposé (5) du matériel d'enregistrement (2) étant entouré par le ou les éléments élastiques (4) ou le matériel d'enregistrement (2) étant disposé au moins localement entre le ou les éléments élastiques (4) et un autre élément élastique (6).

13. Procédé selon la revendication 11 ou 12 **caractérisé en ce qu'**au moins une desdites au moins deux électrodes (7, 8) et d'autres électrodes sont disposées dans un plan dans un motif bidimensionnel, de préférence régulier, comportant plus préférentiellement des colonnes (19) et des lignes (18) en tant que dites premières électrodes (7) et auxquelles peuvent être appliquées une ou plusieurs tensions ou des charges.

14. Procédé selon la revendication 13, **caractérisé en ce que** les électrodes sont disposées dans le motif de sorte qu'un dispositif d'affichage pouvant être commandé soit formé par le biais du motif des électrodes.

15. Procédé selon l'une quelconque des revendications 11 à 14, **caractérisé en ce qu'**une contre-électrode (8) est associée à chacune des premières électrodes (7) de sorte que soient générées des paires d'électrodes composées respectivement d'une première électrode (4) et d'une contre-électrode (8) et que les premières électrodes (7) soient disposées sur un côté du matériel d'enregistrement (2) et les contre-électrodes (8) sur un côté opposé du matériel d'enregistrement (2).
